# EUROPÄISCHE PATENTSCHRIFT

(11) **EP 0 667 309 B1**
(45) Veröffentlichungstag und Bekanntmachung des Hinweises auf die Patenterteilung: **28.10.1998**
(21) Anmeldenummer: 95101461.2
(22) Anmeldetag: 03.02.1995
(51) Int. Cl.: B65G 15/58, F26B 15/18

(54) **Werkstück-Behandlungsvorrichtung**
Treatment device for workpieces
Dispositif pour le traitement de pièces à usiner

(30) Priorität: 11.02.1994 DE 4404307; 17.11.1994 DE 4440926
(43) Veröffentlichungstag der Anmeldung: 16.08.1995
(73) Patentinhaber: LTG LUFTTECHNISCHE GMBH, 70435 Stuttgart (DE)
(72) Erfinder: Mokler, Bernhard, Dipl.-Ing., D-71706 Markgröningen (DE); Gericke, Stephan, Dipl.-Ing.(FH), D-73760 Ostfildern (DE)
(74) Vertreter: Grosse, Rainer, Dipl.-Ing.

(56) Entgegenhaltungen:
- EP-A- 0 179 564
- AT-B- 345 737
- DE-A- 2 128 102
- DE-A- 3 001 531
- DE-A- 4 005 349
- GB-A- 1 094 917

## Beschreibung

Die Erfindung betrifft eine Trocknungsvorrichtung gemäß dem Oberbegriff des Anspruchs 1.

Eine als Trocknungsvorrichtung ausgebildete Werkstück-Behandlungsvorrichtung der eingangs genannten Art ist bekannt. Sie dient zur Trocknung von lackierten beziehungsweise bedruckten Werkstücken, insbesondere Dosen und weist als Transportmittel ein nach Art eines Förderbandes umlaufendes Transportband auf, das luftdurchlässig ausgebildet ist. Das Transportband stützt sich bei seiner Bewegung durch die Behandlungszone auf einer Unterlage ab. Die zu trocknenden Gegenstände werden auf der einen Seite der Behandlungsvorrichtung auf das Transportband gestellt und durchlaufen den Trocknungsofen. Während des Durchlaufens werden die frisch bedruckten beziehungsweise lackierten Bereiche der Dose einem Trocknungsluftstrom ausgesetzt. Auf diese Weise wird ein Trocknungsprozeß durchgeführt, so daß die Werkstücke auf der anderen Seite des Trocknungsofens im getrockneten Zustand entnommen werden können. Die bekannte Vorrichtung weist ein Metallgliederband auf, das einen entsprechend starken Antrieb erfordert und bei nicht sehr standsicheren Werkstücken Nachteile mit sich bringt.

Aus der DE-A-40 05 349 ist eine Vorrichtung zum Festhalten und Fördern von Platten bekannt, die ein Haftband aufweist. Das Haftband besitzt einen Mehrschichtaufbau, bei dem Stahldrahtstränge verwendet werden und eine Verklebung mit Kunststoff oder Gummi erfolgt oder aber auch eine Vulkanisierung vorgesehen sein kann. Das Haftband wird von Schlitzen durchsetzt, um eine Luftdurchlässigkeit zu erzielen.

Aus der DE-A-21 28 102 geht ein Förderer mit einem Öffnungen aufweisenden Förderband hervor. Das Förderband ist als Flachdrahtband ausgebildet, auf dem Querplatten mit Abstand voneinander angeordnet sind.

Der Erfindung liegt die Aufgabe zugrunde, eine Trocknungsvorrichtung der eingangs genannten Art so zu gestalten, daß die Werkstücke eine hohe Standsicherheit bei minimaler Antriebsenergie für die Vorrichtung aufweisen.

Diese Aufgabe wird erfindungsgemäß durch die Merkmale des neuen Anspruchs 1 gelöst. Aufgrund der Ausbildung des Transportbands als Netzband, das aus Aramid-Fasern besteht, und dadurch, daß die Anlage als Unterlage des Transportbands ausgebildet ist, gleitet das Transportband optimal auf der mit Löchern oder Schlitzen versehenen Unterlage mit minimalem Reibkontakt. Hierdurch ist ein ruckfreier und sehr leichtgängiger Betrieb gewährleistet. Ferner liegt eine hohe Flexibilität vor, das heißt, das Transportband paßt sich optimal den entsprechenden Umlenkbereichen usw. an und besitzt ferner ein sehr geringes Gewicht.

Hohe Luftdurchlässigkeit liegt bei dem Netzband vor, bei dem die Maschenweite derart gewählt ist, daß sie kleiner als die Stellfläche der zu behandelnden Gegenstände ist, um einen sicheren Stand der zu transportierenden Werkstücke zu gewährleisten.

Das aus Aramid-Fasern bestehende Netzband hat den Vorteil, daß bei einer Temperaturbehandlung die Wärmekapazität des Transportbandes sehr klein ist, das heißt, Temperaturänderungen, so wie sie beim Austritt des Transportbandes aus der Behandlungszone und Wiedereintritt in diese auftreten, führen nur zu geringen Energieverlusten. Darüberhinaus ist es sogar möglich, verschiedene Behandlungszonen, beispielsweise eine Heiz- und eine Kühlzone direkt aufeinander folgen zu lassen, wobei diese von einem einzigen Transportband durchlaufen werden. Das aus Kunststoffmaterial bestehende Transportband führt dennoch aufgrund der vorstehend genannten Umstände nicht zu hohen Energiekosten. Die Verwendung von Aramid-Fasern führt zu einer hohen thermischen und chemischen Beständigkeit, zu einer hohen mechanischen Festigkeit und Elastizität. Darüberhinaus besteht Formstabilität und Flammfestigkeit.

Nach einer Weiterbildung der Erfindung ist vorgesehen, daß die Unterlage und/oder das Transportmittel aus Gleitkunststoff besteht oder eine Gleitkunststoffbeschichtung, insbesondere aus Polytetrafluorethylen (PTFE) aufweist. Das Polytetrafluorethylen besitzt besonders hohe und gute Gleiteigenschaften und ist darüberhinaus auch elastisch, mechanisch hochstabil, flammenfest sowie hitze- und kältebeständig, so daß eine Wärme- beziehungsweise Kältebehandlung der Werkstücke problemlos durchführbar ist.

Das Transportband bildet ein sogenanntes Endlos-Band, das heißt, es wird als Schleife im Endlosbetrieb um Umlenkrollen herumgeführt, so daß sein hinlaufendes Trum die Werkstücke durch die Behandlungszone transportiert und das rücklaufende Trum - ohne Werkstücke- zum Ausgangspunkt zurückläuft. Für die Trocknung der Werkstücke mittels einer Heißluft- und/oder Kühlluftbehandlung ist das Transportmittel und die Unterlage luftdurchlässig ausgebildet. Dadurch ist ein Luftpassierweg geschaffen, wodurch die auf dem Transportmittel stehenden, zu behandelnden Werkstücke standfest gehalten und auch gleichzeitig der Luftbehandlung unterzogen werden.

Durch willkürlich gewählte Unterdrucköffnungen in der Unterlage können Falschluftströmungen, die beispielsweise im Bereich von Stoßstellen (Stoßstellen heißt hier nicht unbedingt, daß zwei Teile aneinander stoßen, sondern es können beispielsweise auch Trennwände oder Stützwände zum Unterteilen von Unterdruckkammern gemeint sein) entstehen, nicht kompensiert werden.

Durch diese Ausbildung von Falschluftströmungen in Bereichen von Stoßstellen ist die Standsicherheit von zu transportierenden Gegenständen nicht ausreichend gewährleistet. Um dies zu verhindern, ist vorteilhaft vorgesehen, daß die Unterlage aus mindestens zwei aneinanderstoßenden Unterlagenabschnitten besteht und daß in der Zone (erste Zone) der Stoßstelle der auf das jeweilige Werkstück dort wirkende Querschnitt (Randlochungsquerschnitt) der Unterdrucköffnungen größer als der wirkende Querschnitt (Normallochungsquerschnitt) in den übrigen Zonen (zweite Zone) der Unterlage ist. Aufgrund der Ausbildung der Unterlage aus einer Anzahl von Unterlagenabschnitten wird die Herstellung wesentlich kostengünstiger. Durch diese Art der Ausgestaltung der Unterlage ergeben sich zwischen zwei aneinandergrenzenden Unterlagenabschnitten Stoßstellen. Derartige Stoßstellen bilden eine Inhomogenität im Bezug auf die Luftführung und damit auf die Standfestigkeit der Gegenstände. Inhomogenität können auch Trennwände und/oder Stützen unterhalb einer Unterlage erzeugen, wobei die Trennwände und Stützen dabei im Sinne von Stoßstellen zu verstehen sind. Egal wie die Stoßstelle ausgebildet ist, wird genau an dieser Stelle eine Falschluftströmung erzeugt dadurch, daß die Stoßstellen unterdruckfreie beziehungweise unterdruckreduzierte Zonen bilden, das heißt, sie befinden sich außerhalb der Saugkammern. Dadurch, daß sie sich nicht im Wirkungsbereich der Saugkammern befinden, wird an dieser Stelle kein oder ein viel zu geringer Unterdruck aufgebaut, so daß die zu transportierenden Dosen im Bereich einer Stoßstelle nicht genügend angesaugt werden, wobei dadurch die Standsicherheit darunter leidet.

Wird die Unterlage aus mehreren Unterlagenabschnitten gebildet und ist jedem Unterlagenabschnitt eine Saugkammer zugeordnet, dann ist im Bereich der Stoßstellen keine Kontinuität in der Luftführung gegeben. Dies wird jedoch erfindungsgemäß dadurch ausgeglichen oder beseitigt, indem in der ersten Zone (der Bereich, der die Stoßstelle und jeweils einen Teilbereich der beiden angrenzenden Unterlagenabschnitten überfängt) Unterdrucköffnungen vorgesehen sind, die einen größeren wirkenden Querschnitt als jeweils in dem übrigen Bereich (der die zweite Zone bildet) befindlichen weiteren Unterdrucköffnungen.

Die erste Zone bildet den Randlochungsquerschnitt und die zweite Zone den Normallochungsquerschnitt. Es gibt die unterschiedlichsten Möglichkeiten, den wirkenden Querschnitt der Unterdrucköffnungen auf das jeweilige Werkstück im Randlochungsquerschnitt, im Gegensatz zu dem wirkenden Querschnitt im Normallochungsquerschnitt, zu vergrößern. Ein Beispiel wäre, die Unterdrucköffnungen im Bereich des Randlochungsquerschnitts in den Abmessungen kleiner als im Bereich des Normallochungsquerschnitts zu gestalten, dafür aber den Abstand zwischen den einzelnen Unterdrucköffnungen zu verringern, so daß insgesamt der wirkende Randlochungsquerschnitt auf das jeweilige Werkstück größer als der wirkende Normallochungsquerschnitt ist.

Vorteilhaft ist es, wenn der Randlochungsquerschnitt von einer erhöhten Anzahl von Unterdrucköffnungen in der ersten Zone gegenüber der Anzahl der Unterdrucköffnungen in der zweiten Zone gebildet ist. Dies kann, muß jedoch nicht heißen, daß die Unterdrucköffnungen im Randlochungsquerschnitt alle das gleiche Maß aufweisen, beziehungsweise das Maß der Unterdrucköffnungen im Normallochungsquerschnitt immer gleich ist. Es kann vorzugsweise vorgesehen sein, daß zumindest einige der Unterdrucköffnungen in der ersten Zone jeweils einen kleineren Querschnitt als die oder einige der Unterdrucköffnungen der zweiten Zone aufweisen. Das erforderliche Lochbild kann somit genau auf die Größe der zu transportierenden Dosen, die Maschengeometrie des Bandes und die Geometrie des Falschluft-Strömungskanals in Verbindung mit dem aus trocknungstechnischen Gründen angestrebten spezifischen Heißluftvolumenstroms durch das Band abgestimmt werden.

Insbesondere ist vorteilhaft, daß unabhängig vom Standort des Werkstücks auf dem Transportmittel jeder Standfläche des Werkstücks mindestens eine, vorzugsweise mehrere Unterdrucköffnungen zugeordnet ist/sind. Dies gewährleistet eine optimale Standfestigkeit der zu transportierenden Werkstücke (Dosen) auf dem Transportmittel im Bereich der ersten Zone ebenso wie in der durch Falschluftströmung gefährdeten zweiten Zone.

Nach einer Weiterbildung der Erfindung ist vorgesehen, daß jedem Unterlagenabschnitt eine separate, mit den zugehörigen Unterdrucköffnungen kommunizierende Saugkammer zugeordnet ist. Dies führt zu einer optimalen Luftführung entlang der gesamten in der Decke vorhandenen Unterdrucköffnungen beziehungsweise zu sehr guten Saugergebnissen. Es kann vorgesehen sein, daß die einzelnen Saugkammern an eine gemeinsame Unterdruckquelle angeschlossen sind.

Insbesondere bildet jede Stoßstelle eine unterdruckfreie beziehungsweise unterdruckreduzierte dritte Zone. Die Stoßstelle kann -wie bereits erwähnt- entweder eine Fuge zwischen zwei aneinandergrenzenden Unterlagenabschnitten oder auch Trennwände von Saugkammern sein. Die unterdruckfreie dritte Zone wird immer von der Stoßstelle an sich gebildet, das heißt, die dritte Zone liegt in der ersten Zone, wobei die erste Zone die Stoßstelle überlappt. Anschließend an die erste Zone ist die zweite Zone (mittlerer Bereich) ausgebildet.

Vorzugsweise ist vorgesehen, daß jeder Unterlagenabschnitt von der Decke eines kastenartig ausgebildeten Unterlagenteils, insbesondere Saugkastens, gebildet ist. In der Decke eines jeden Unterlagenteils sind die Unterdrucköffnungen angebracht.

Nach einer Weiterbildung der Erfindung ist vorgesehen, daß jedes Unterlagenteil ein gekantetes Blech aufweist, das zwei Seitenwände bildende Schenkel und einen die Decke bildenden Zwischenabschnitt aufweist, wobei die Seitenwände über Kantungen in die Decke übergehen und daß die Längserstreckungen der Kantungen quer zur Transportrichtung verlaufen. Die Seitenwände, die die Schenkel des U-förmig gekanteten Bleches sind, bilden jeweils die Stoßstelle zwischen zwei aneinandergrenzenden Unterlagenabschnitten.

Insbesondere ist vorgesehen, daß die Anordnung der Unterdrucköffnungen und/oder ihr Querschnitt und der lochfreie Bereich des Transportmittels, insbesondere Transportbandes, derart aufeinander abgestimmt sind, daß einer Standfläche eines Gegenstandes mindestens eine nicht abgedeckte Unterdrucköffnung oder ein hinreichend großer Bereich dieser Unterdrucköffnungen für das standsichere Halten des Werkstücks zugeordnet ist. Das heißt, bei der Anordnung der Unterdrucköffnungen im Unterlagenabschnitt und der Wahl der Maschengeometrie des dazugehörenden Transportbandes, muß die ungünstigste Überdeckungsposition berücksichtigt werden und damit Einfluß auf die Gestaltung von Unterlage und Transportband haben.

Weitere vorteilhafte Ausgestaltungen sind in den Unteransprüchen gekennzeichnet.

Die Zeichnungen veranschaulichen die Erfindung anhand von Ausführungsbeispielen und zwar zeigt:
- Figur 1: eine schematische Ansicht einer Werkstück-Behandlungsvorrichtung,
- Figur 2: einen Schnitt durch eine Transporteinrichtung,
- Figur 3: einen Ausschnitt aus einem Transportband der Transporteinrichtung,
- Figur 4: ein weiteres Ausführungsbeispiel einer als Netz ausgebildeten Transporteinrichtung mit gelöcherter Unterlage,
- Figur 5: einen Querschnitt durch einen die Maschen des Netzbandes der Figur 4 bildenden Steg,
- Figur 6: eine perspektivische Ansicht auf eine Unterlage einer Transporteinrichtung und
- Figur 7: eine Draufsicht auf die Unterlage einer erfindungsgemäßen Transporteinrichtung.

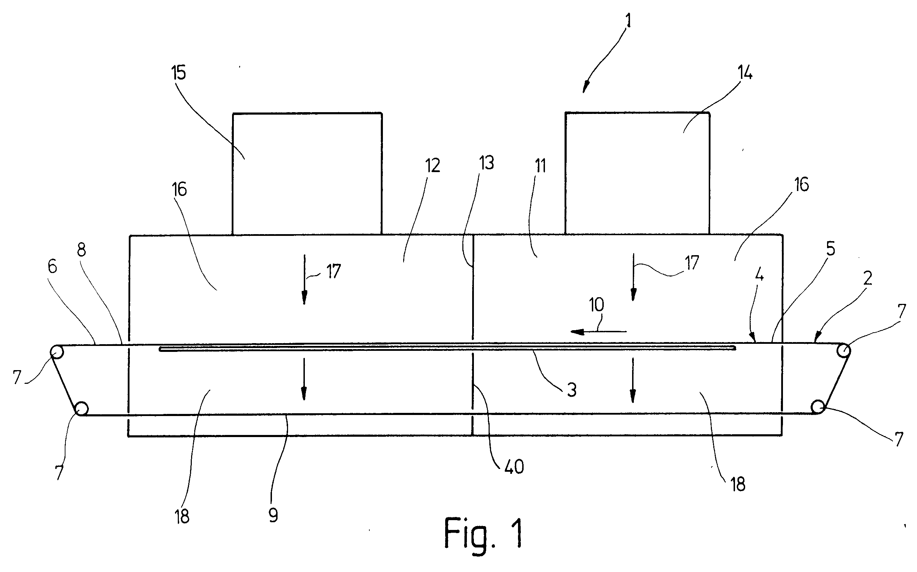

Die Figur 1 zeigt eine Werkstück-Behandlungsvorrichtung 1, die eine Transporteinrichtung 2 aufweist. Die Transporteinrichtung 2 weist eine ortsfeste Unterlage 3 sowie ein sich relativ zur Unterlage bewegendes Transportmittel 4 auf, das als Transportband 5 ausgebildet ist. Das Transportband 5 ist als Endlosschleife 6 ausgebildet und wird um Umlenkzylinder 7 geführt, so daß sich ein oberes Trum 8 und ein unteres Trum 9 ergibt. Mittels einer nicht dargestellten Antriebseinrichtung wird das Transportband 5 im Umlaufbetrieb in Richtung des Pfeiles 10 bewegt, so daß auf das obere Trum 8 aufgestellte Werkstücke, beispielsweise zu trocknende, lackierte Dosen durch Behandlungszonen 11, 12 der Werkstück-Behandlungsvorrichtung 1 transportiert werden. Eine Dosenzuführeinrichtung sowie eine Dosenentnahmeeinrichtung ist -der Übersichtlichkeit halber- in Figur 1 nicht dargestellt.

Die Behandlungszonen 11 und 12 sind mittels einer Zwischenwand 13 voneinander getrennt, wodurch sich eine gewisse Abschottung ergibt. Die Zwischenwand 13 bildet bei diesem Ausführungsbeispiel eine Stoßstelle 40. Dem Trum 8 sind eingangs- und ausgangsseitig Werkstückschleusen zugeordnet (nicht dargestellt). Der Behandlungszone 11 ist ein Heizgebläse 14 und der Behandlungszone 12 ein Heizgebläse 15 zugeordnet. Das Heizgebläse 14 bläst in den oberhalb der Transporteinrichtung 2 liegenden Raum 16 der Behandlungszone 11 Heißluft ein (Pfeil 17), die die Transporteinrichtung 2 passiert und in einen unterhalb der Transporteinrichtung 2 gelegenen Raum 18 eintritt, von dem aus sie wieder zum Heizgebläse 14 zurückgeführt wird. Es liegt somit ein Umluftbetrieb vor. Entsprechendes gilt für die Behandlungszone 12.

Im Ausführungsbeispiel der Figur 1 durchläuft das untere Trum 9 die Räume 18. Nach einem nicht dargestellten Ausführungsbeispiel kann jedoch auch vorgesehen sein, daß der die Heiß-Rückluft führende Raum 18 mittels einer Wandung zum unteren Trum 9 abgeschottet ist, um Wärmeverluste zu vermeiden.

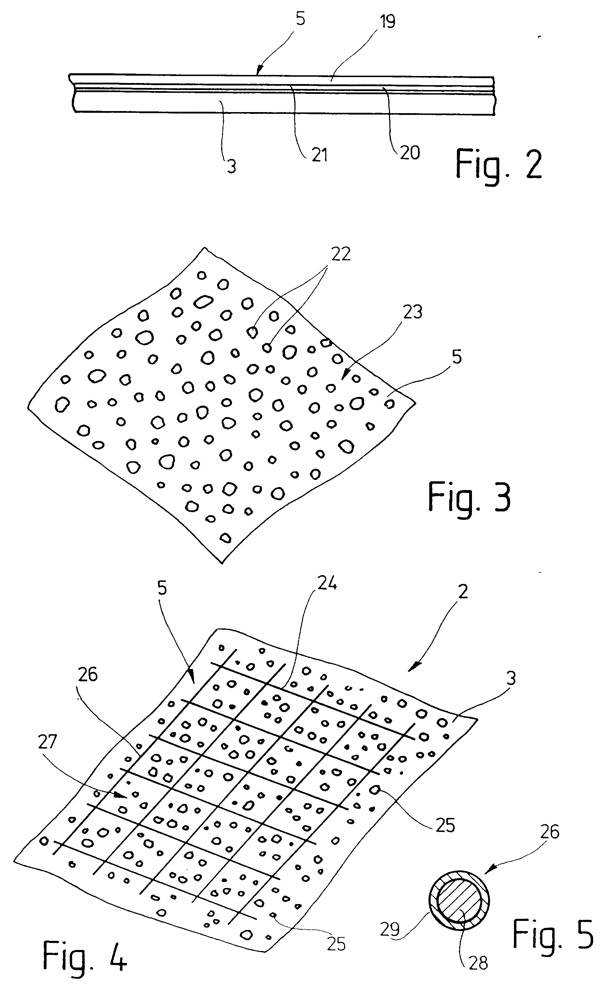

Gemäß Figur 2 weist das Transportband 5 einen Grundkörper 19 auf, der an seiner Unterseite 20 mit einer Gleitkunststoffbeschichtung 21 versehen ist.

Es ist jedoch auch möglich, daß sich diese Gleitkunststoffbeschichtung 21 auch auf der Oberseite des Grundkörpers 19 befindet, das heißt, daß dieser Grundkörper 19 allseitig mit der Gleitkunststoffbeschichtung 21 versehen ist. Mit der Gleitkunststoffbeschichtung 21 liegt das Transportband 5 auf der Unterlage 3 auf, das heißt, die Unterlage 3 stützt das Transportband 5, so daß es eine ebene Fläche bildet, auf der Werkstücke standsicher abgestellt und transportiert werden können.

Aufgrund der Gleitkunststoffbeschichtung 21 des Transportbandes 5 rutscht dieses mit nur äußerst geringen Verlusten ruckfrei über die stationäre Unterlage 3, wodurch ein optimaler und störungssicherer Betrieb der Werkstück-Behandlungsvorrichtung 1 gewährleistet ist.

Um -wie vorstehend erwähnt- den Umluftbetrieb durchführen zu können, weist das Transportband 5 gemäß Figur 3 Löcher 22 auf, die zu einer Luftdurchlässigkeit führen. Das Transportband 5 ist somit als Lochband 23 ausgebildet. Jegliche Ausgestaltungen, die eine Luftdurchlässigkeit bewirken, sind Gegenstand der Erfindung, wobei die Löcher 22 oder dergleichen stets derart ausgebildet sind, daß auch die Gleitkunststoffbeschichtung 21 eine Luftdurchlässigkeit besitzt.

Zu den vorstehenden Ausführungen sei noch erwähnt, daß es auch möglich ist, die Unterlage 3 mit einer Gleitkunststoffbeschichtung zu versehen, wodurch ebenfalls die vorstehenden Vorteile erzielt werden.

Es ist alternativ auch möglich, sowohl das Transportmittel als auch die Unterlage jeweils mit einer Gleitkunststoffbeschichtung zu versehen.

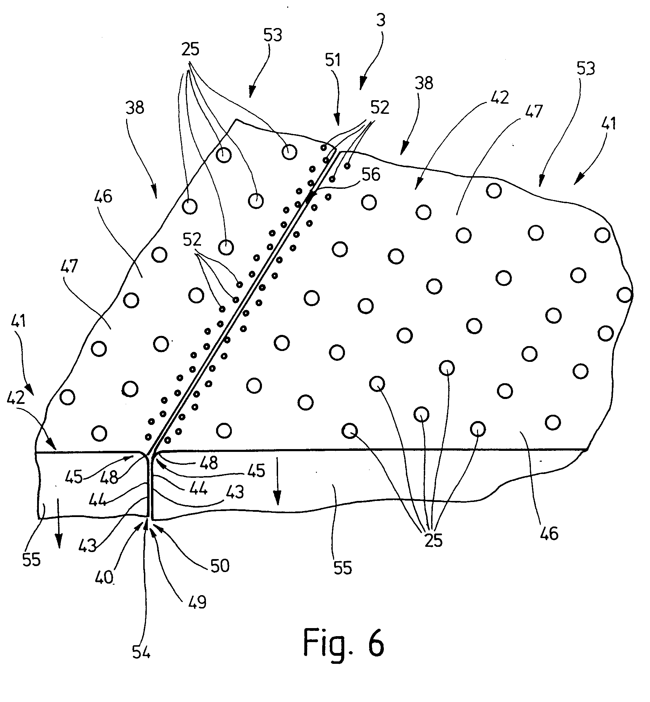

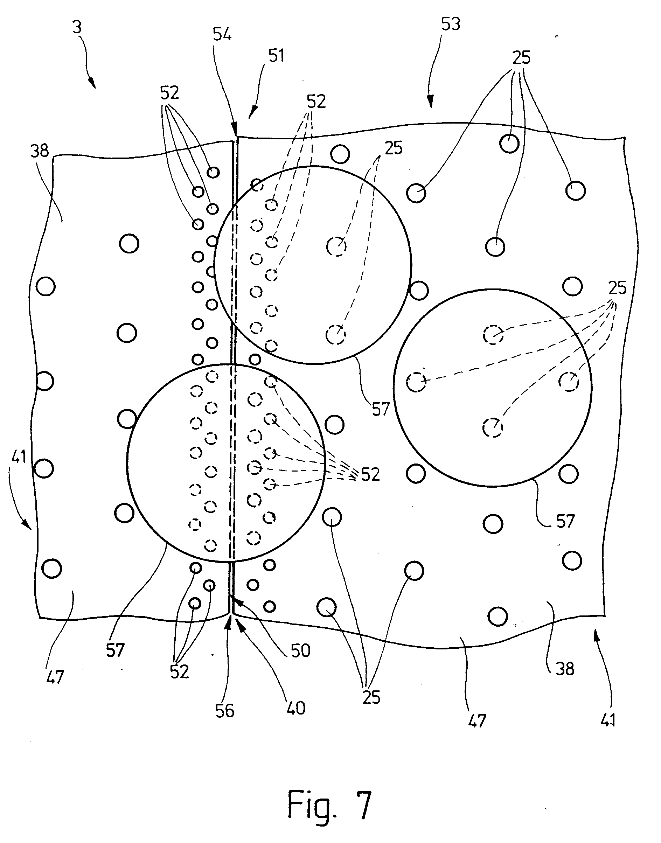

In Figur 4 ist die Draufsicht auf eine Transporteinrichtung 2 gemäß der Erfindung dargestellt, bei der das Transportband 5 als Netzband 24 ausgebildet ist, das über die ortsfeste Unterlage 3 geführt wird. Damit die von den Heizgebläsen 14 und 15 auf die Transporteinrichtung 2 geleitete Heißluft die Transporteinrichtung 2 durchdringen kann, sind in die ortfeste Unterlage 3 Unterdrucköffnungen 25 beziehungsweise Schlitze eingearbeitet. Diese Anordnung der Unterdrucköffnungen 25 führt bei der Ausgestaltung der Unterlage 3 als durchgehende, das heißt nicht unterbrochene beziehungsweise aus mehreren Teilen bestehende, Unterlage 3 zu einer guten Standfestigkeit von zu transportierenden Gegenständen. Auf die Ausgestaltung der Unterdrucköffnungen 25 bei einer Unterlage 3, die aus mehreren Unterlagenteilen 41 besteht, wird nachstehend noch näher eingegangen (siehe Figur 6 und 7). Die in Figur 4 dargestellte Ausgestaltung des Netzbandes 24 besteht aus rechtwinklig angeordneten Stegen 26, von denen die einzelnen Maschen 27 des Netzbandes 24 gebildet sind. Hierbei ist darauf zu achten, daß die Abmessungen der Maschen 27 kleiner als die Abmessungen der zu trocknenden Gegenstände sind, die auf das Netzband 24 gestellt und durch die Werkstück-Behandlungsvorrichtung 1 transportiert werden.

Das Netzband 24 kann aus Kunststoff, beispielsweise aus Aramid-Fasern hergestellt sein, die mit Polytetrafluorethylen beschichtet sind.

In Figur 5 ist der Querschnitt eines derartigen Steges 26 dargestellt, der aus einem Stegkern 28 besteht, der eine Schicht 29 aus Polytetrafluorethylen aufweist.

In Figur 6 ist ein Teilausschnitt einer Unterlage 3 gezeigt, die bei diesem Ausführungsbeispiel einzelne Unterlagenteile 41 besitzt, die jeweils ein gekantetes Blech 42 aufweisen. Das gekantete Blech 42 hat eine U-förmige Kontur, wobei beide Schenkel 43 eines jeden Unterlagenteiles 41 (in Figur 6 ist jeweils nur ein Schenkel 43 der beiden Unterlagenteile 41 dargestellt) jeweils Seitenwände 44 darstellen. Die Seitenwände 44 gehen über je eine Kantung 45 in eine den Zwischenabschnitt 46 bildende Decke 47 über. Die Kantungen 45 bilden bei dem Übergang von Seitenwand 44 in Decke 47 einen Biegeradius 48 aus. Die Seitenwände 44 eines jeden Unterlagenteiles 41 verlaufen parallel zueinander und quer zur Transportrichtung.

An dieser Stelle, an der sich zwei Seitenwände 44 von zwei aneinandergrenzenden Unterlagenteilen 41 gegenüberliegen, entsteht eine Fuge 49, die als unterdruckfreie beziehungsweise unterdruckreduzierte Zone 50 ausgebildet ist. Die Decke 47 eines jeden Unterlagenteiles 41 der Unterlage 3 läßt sich in drei Zonen aufteilen. In der ersten Zone 51, die auch die unterdruckfreie Zone 50 beinhaltet, liegen Unterdrucköffnungen 52. Die Unterdrucköffnungen 52 sind jeweils in den beiden Randbereichen einer jeden Fuge 49 (gleichzusetzen mit der ersten Zone 51) angeordnet. Die Unterdrucköffnungen 25 liegen in der zweiten Zone 53 der Decke 47, wobei sich die zweite Zone 53 zwischen zwei ersten Zonen 51 eines jeden Unterlagenabschnitts 38 befindet.

Die letzte, dritte Zone 54 wird alleinig von der Fuge 49 beziehungsweise Stoßstelle 40 gebildet. Die dritte Zone 54 bildet die unterdruckfreie beziehungsweise unterdruckreduzierte Zone 50. Die erste Zone 51 überlappt beziehungweise beinhaltet die dritte Zone 54.

Bei diesem in Figur 6 dargestellten Ausführungbeispiel ist jedem Unterlagenabschnitt 38, der von der Decke 47 des jeweiligen Unterlagenteils 41 gebildet wird, eine Saugkammer 55 zugeordnet, die mit den jeweiligen Unterdrucköffnungen 25, 52 kommunizierend in Verbindung steht.

Dadurch, daß die Unterlage 3 aus mehreren Unterlagenteilen 41 besteht, entstehen innerhalb der Stoßstellen 40 Falschluft-Strömungskanäle 56. Falschluft-Strömungskanal 56 bedeutet hier, daß die Wirkung des Unterdrucks in den Saugkammern 55 im Bereich der Stoßstellen 40 teilweise wieder abgebaut wird. Um dies zu vermeiden, werden im Bereich der Stoßstellen 40, das heißt also in der ersten Zone 51, Unterdrucköffnungen 52 vorgesehen, die einen größeren freien Querschnitt aufweisen, so daß die Leckage durch verstärkte Absaugung kompensiert wird. Das erforderliche Lochmuster der Unterdrucköffnungen 52 in der ersten Zone 51 richtet sich nach der Größe der zu transportierenden Dosen, der Maschengeometrie des Transportbandes 5 und der Geometrie des Falschluft-Strömungskanals 56 in Verbindung mit dem aus Standfestigkeitsgründen beziehungsweise trocknungstechnischen Gründen angestrebten spezifischen Heißluftvolumenstrom durch das Band.

Die Anordnung und Ausgestaltung der Unterdrucköffnungen 25 in der zweiten Zone 53 richtet sich ebenso nach der Größe der zu transportierenden Dosen und aus dem gewünschten Druckabfall der Heißluftströmung zur Erzeugung des notwendigen Unterdrucks unter dem Transportband 5, wobei die Versperrung durch die Stege 26 des Netzbandes 24 in der ungünstigsten Überdeckungsposition zu berücksichtigen ist.

Selbstverständlich ist die Größe beziehungsweise Anordnung der Unterdrucköffnungen 25 in der zweiten Zone 53 beziehungsweise der Unterdrucköffnungen 52 in der ersten Zone 51 nicht nur auf das in Figur 6 gezeigte Beispiel beschränkt, sondern der freie Querschnitt der Unterdrucköffnungen 25 beziehungsweise 52 in den jeweiligen Zonen 51, 53 kann unterschiedlich gestaltet werden. Es muß jedoch gewährleistet sein, daß der wirkende freie Querschnitt auf die zu transportierenden Dosen in der ersten Zone 51 größer ist als der wirkende Querschnitt der Unterdrucköffnungen 25 im Bereich der zweiten Zone 53 um, wie bereits erwähnt, die Leckage in der dritten Zone 54 zu kompensieren. Außerdem sollte bei der Auswahl des freien Querschnitts der jeweiligen Unterdrucköffnungen 25, 52 darauf geachtet werden, daß die Größe der Öffnungen mindestens so groß gewählt werden, daß eine einzelne Öffnung nicht ganz oder größtenteils von einem Steg 26 des Netzbandes 24, welches in Figur 4 gezeigt ist, bedeckt werden kann. Die Öffnungsgröße ist aber auch nach oben begrenzt, da mit wachsender Größe der Öffnung bei gleichbleibendem freien Querschnitt der Öffnungsabstand, das heißt, die Teilung größer gewählt werden muß. Dies ist wiederum durch die Dosenaufstandsfläche nach oben begrenzt, da zu jedem Zeitpunkt beim Durchlauf der auf dem Transportband 5 stehenden Dosen durch die einzelnen Behandlungszonen 11, 12 eine genügende Anzahl an Unterdrucköffnungen 25, 52 unterhalb der Dose liegen müssen. Das Transportband 5 ist in der Figur 6 der Übersichtlichkeit halber nicht dargestellt.

In Figur 7 sind zu transportierende Dosen als Kreise 57 dargestellt. Hier sind beispielhaft drei mögliche "Lagen" dargestellt. Zum einen die Normallage, die der Kreis 57 im rechten Bildteil der Figur 7 einnimmt, zum zweiten die Randlage, die der Kreis 57 im oberen Bereich der Figur 7 einnimmt und drittens die Grenzlage, die der Kreis 57 im unteren linken Bereich der Figur 7 einnimmt. Bei der Normallage überdeckt der Kreis 57 vorzugsweise immer vier Unterdrucköffnungen 25. Dadurch wird so viel Heißluft abgesaugt, daß der notwendige Unterdruck unter der Dose auch bei Versperrungen durch das Transportband 5 aufgebaut wird. Die Randlage zeigt, daß der Kreis 57 nur die Unterdrucköffnungen 52 in der Decke 47 des rechten Unterlagenabschnitts 38, eine geringe Anzahl von Unterdrucköffnungen 25 und einen Teilbereich der Stoßstelle 40 überfängt. Der Kreis 57 überdeckt jedoch nicht die Unterdrucköffnungen 52 in der Decke 47 des linken Unterlagenabschnitts 38. Durch den größeren wirkenden Querschnitt der Unterdrucköffnungen 52 in der ersten Zone 51 wird der Falschluft-Strömungskanal 56 in der Stoßstelle 40 durch die erhöhte Strömungsmenge aufgefangen beziehungsweise kompensiert. Werden die Unterdrucköffnungen 52 und die Unterdrucköffnungen 25 näher aneinander gerückt als es der Teilung der Unterdrucköffnungen 25 in der zweiten Zone 53 entspricht, wodurch der freie Querschnitt weiter erhöht wird, kann eine weitere Verbesserung erzielt werden.

In der Grenzlage befindet sich der Kreis 57 genau mittig über der Stoßstelle 40, von zwei aneinandergrenzenden Unterlagenabschnitten 38. Der Falschluft-Strömungskanal 56 in der Stoßstelle 40 wird durch den größeren wirkenden Querschnitt der Unterdrucköffnungen 52 auf die zu transportierenden Dosen ebenso kompensiert.

Es wird deutlich, daß bei richtiger Wahl des Transportbandes 5 und der Ausgestaltung und Anordnung der Unterdrucköffnungen 25 beziehungsweise 52 in der Decke 47 eines jeden Unterlagenteiles 41 und auch Inhomogenitäten, das heißt durch Stoßstellen 40 auftretende unterdruckfreie beziehungsweise unterdruckreduzierte Zonen 50 (dritte Zone 54), ausgeglichen werden können. Dies gewährleistet eine optimale Standfestigkeit der Dosen beim Transport durch die jeweiligen Behandlungszonen 11, 12.

## Patentansprüche

1. Trocknungsvorrichtung mit einer Transporteinrichtung (2) in Gestalt eines Bandförderers (8, 9) für zu behandelnde Werkstücke, insbesondere für die Trocknung von lackierten oder bedruckten Dosen, wobei die Transporteinrichtung (2) ein sich entlang einer ortsfesten Anlage bewegendes, als luftdurchlässiges Transportband (5) ausgebildetes Transportmittel für die Werkstücke aufweist und die Anlage luftdurchlässig ist, insbesondere mit Löchern oder Schlitzen versehen ist, **dadurch gekennzeichnet**, daß das Transportband (5) ein Netzband (24) aus Aramid-Fasern ist und daß die Anlage dessen Unterlage (3) ist.

2. Trocknungsvorrichtung nach Anspruch 1, **dadurch gekennzeichnet**, daß die Unterlage (3) und/oder das Transportmittel (4) eine Gleitkunststoffbeschichtung, insbesondere aus Polytetrafluorethylen (PTFE), aufweist.

3. Trocknungsvorrichtung nach einem der vorhergehenden Ansprüche, **dadurch gekennzeichnet**, daß die Unterdrucköffnungen (52) aufweisende Unterlage (3) aus mindestens zwei aneinanderstoßenden Unterlagenabschnitten (38) besteht und daß in der Zone (erste Zone 51) der Stoßstelle (40) der auf das jeweilige Werkstück dort wirkende Querschnitt (Randlochungsquerschnitt) der Unterdrucköffnungen (52) größer als der wirkende Querschnitt (Normallochungsquerschnitt) in den übrigen Zonen (zweite Zone 53) der Unterlage (3) ist.

4. Trocknungsvorrichtung nach Anspruch 3, **dadurch gekennzeichnet**, daß der Randlochungsquerschnitt von einer erhöhten Anzahl von Unterdrucköffnungen (52) in der ersten Zone (51) gegenüber der Anzahl der Unterdrucköffnungen (25) in der zweiten Zone (53) gebildet wird.

5. Trocknungsvorrichtung nach einem der vorhergehenden Ansprüche 3 oder 4, **dadurch gekennzeichnet**, daß zumindest einige der Unterdrucköffnungen (52) in der ersten Zone (51) jeweils einen kleineren Querschnitt als die oder einige der Unterdrucköffnungen (25) in der zweiten Zone (53) aufweisen.

6. Trocknungsvorrichtung nach einem der vorhergehenden Ansprüche 3 bis 5, **dadurch gekennzeichnet**, daß jedem Unterlagenabschnitt eine separate, mit den zugehörigen Unterdrucköffnungen (25, 52) kommunizierende Saugkammer (55) zugeordnet ist.

7. Trocknungsvorrichtung nach einem der vorhergehenden Ansprüche 3 bis 6, **dadurch gekennzeichnet**, daß die Stoßstelle (40) eine unterdruckfreie beziehungsweise unterdruckreduzierte dritte Zone (54) bildet.

8. Trocknungsvorrichtung nach einem der vorhergehenden Ansprüche 3 bis 7, **dadurch gekennzeichnet**, daß jeder Unterlagenabschnitt (38) von der Decke (47) eines kastenartig ausgebildeten Unterlagenteiles (41), insbesondere Saugkastens, gebildet ist.

9. Trocknungsvorrichtung nach Anspruch 8, **dadurch gekennzeichnet**, daß jedes Unterlagenteil (41) ein vorzugsweise gekantetes Blech (42) aufweist, das zwei Seitenwände (44) bildende Schenkel (43) und einen die Decke (47) bildenden Zwischenabschnitt (46) aufweist, wobei die Seitenwände (44) über Kantungen (45) in die Decke (47) übergehen und daß die Längserstreckung der Kantungen (45) quer zur Transportrichtung verlaufen.

10. Trocknungsvorrichtung nach einem der vorhergehenden Ansprüche 3 bis 9, **dadurch gekennzeichnet**, daß die Anordnung der Unterdrucköffnungen (25, 52) und/oder ihr Querschnitt und der lochfreie Bereich des Transportbandes (5), derart aufeinander abgestimmt sind, daß einer Standfläche eines Gegenstandes mindestens eine nicht abgedeckte Unterdrucköffnung (25, 52) oder ein hinreichend großer Bereich dieser Unterdrucköffnungen (25, 52) für das standsichere Halten des Werkstücks zugeordnet ist.

## Claims

1. A drying device with a conveying device (2) in the form of a belt conveyor (8, 9) for workpieces to be treated, in particular for drying lacquered or printed cans, wherein the conveying device (2) comprises a convey or means moving along a stationary plant and constructed in the form of an air-permeable conveyor belt (5) for the workpieces, and the plant is air-permeable, in particular with perforations or slots, **characterized in that** the conveyor belt (5) is a reticulated belt (24) of aramid fibres, and the plant is the support (3) thereof.

2. A drying device according to Claim 1, **characterized in that** the support (3) and/or the conveyor means (4) has a sliding coating of plastics material, in particular of polytetrafluoroethylene (PTFE).

3. A drying device according to one of the preceding Claims, **characterized in that** the support (3), provided with under-pressure openings (52), comprises at least two mutually abutting support portions (38), and in the zone (first zone 51) of the abutment point (40) the cross-section (marginal perforation cross-section) of the under-pressure openings (52) acting upon the respective workpiece there is larger than the acting cross-section (normal perforation cross-section) in the remaining zones (second zone 53) of the support (3).

4. A drying device according to Claim 3, **characterized in that** the marginal perforation cross-section is formed by a number of under-pressure openings (52) in the first zone (51) larger than the number of under-pressure openings (25) in the second zone (53).

5. A drying device according to one of the preceding Claims 3 or 4, **characterized in that** at least some of the under-pressure openings (52) in the first zone (51) each have a smaller cross-section than the under-pressure openings (25) or some of the under-pressure openings (25) in the second zone (53).

6. A drying device according to one of the preceding Claims 3 to 5, **characterized in that** a separate suction chamber (55) communicating with the associated under-pressure openings (25, 52) is associated with each support portion.

7. A drying device according to one of the preceding Claims 3 to 6, **characterized in that** the abutment point (40) forms a third zone (54) free of under-pressure or having reduced under-pressure.

8. A drying device according to one of the preceding Claims 3 to 7, **characterized in that** each support portion (38) is formed by the top (47) of a support part (41) constructed in the manner of a box, in particular a suction box.

9. A drying device according to Claim 8, **characterized in that** each support part (41) has a preferably bent metal sheet (42) which comprises two arms (43) forming lateral walls (44) and one intermediate portion (46) forming the top (47), wherein the lateral walls (44) pass into the top (47) by way of edgings (45), and the longitudinal extension of the edgings (45) is orientated transversely to the conveying direction.

10. A drying device according to one of the preceding Claims 3 to 9**, characterized in that** the arrangement of the under-pressure openings (25, 52) and/or the cross-section thereof and the perforation-free area of the conveyor belt (5) are adapted to one another in such a way that a standing face of an article has associated therewith at least one under-pressure opening (25, 52) not covered or a sufficiently large area of the said under-pressure openings (25, 52) for holding the workpiece securely.

## Revendications

1. Dispositif de séchage de pièces à traiter muni d'un dispositif de transport (2) ayant la forme d'un convoyeur (8, 9), en particulier pour le séchage de boîtes de conserves laquées ou imprimées, le dispositif de transport (2) présentant un moyen de transport des pièces formé comme bande transporteuse (5) perméable à l'air et se déplaçant le long d'une installation stationnaire, l'installation étant perméable à l'air, notamment pourvue de trous ou de fentes, **caractérisé en ce que** la bande transporteuse (5) est une bande perforée (24) en fibres d'aramide et que l'installation est la base (3) de cette bande perforée.

2. Dispositif de séchage selon la revendication 1, **caractérisé en ce que** la base (3) et/ou le moyen de transport (4) présente(nt) un revêtement en plastique glissant, en particulier en polytétrafluoréthylène (PTFE).

3. Dispositif de séchage selon l'une des revendications précédentes, **caractérisé en ce que** la base (3) présentant les ouvertures de dépression (52) est constituée d'au moins deux sections (38) contigues et que dans la zone (première zone 51) du point de contiguïté (40) la section (section à perforation marginale) des ouvertures de dépression (52) agissant sur la pièce respective est supérieure à la section (section à perforation normale) agissant dans les autres zones (deuxième zone 53) de la base (3).

4. Dispositif de séchage selon la revendication 3, **caractérisé en ce que** la section à perforation marginale est formée par un nombre élevé d'ouvertures de dépression (52) dans la première zone (51) par rapport au nombre des ouvertures de dépression (25) dans la deuxième zone (53).

5. Dispositif de séchage selon l'une des revendications précédentes 3 ou 4, **caractérisé en ce** qu'au moins quelques unes des ouvertures de dépression (52) de la première zone (51) ont respectivement une section inférieure à celle des ouvertures de dépression (25) ou à quelques unes de ces ouvertures de dépression de la deuxième zone (53).

6. Dispositif de séchage selon l'une des revendications précédentes 3 à 5, **caractérisé en ce qu**'une chambre d'aspiration (55), séparée et communiquant avec les ouvertures de dépression (25, 52) correspondantes, est attribuée à chaque section de la base.

7. Dispositif de séchage selon l'une des revendications précédentes 3 à 6**, caractérisé en ce que** le point de contiguïté (40) forme une troisième zone (54) exempte de dépression ou à dépression réduite.

8. Dispositif de séchage selon l'une des revendications précédentes 3 à 7, **caractérisé en ce que** la section de la base (38) est formée par le plafond (47) d'une partie de la base (41) en forme de caisse, en particulier d'une caisse d'aspiration.

9. Dispositif de séchage selon la revendication 8, **caractérisé en ce que** chaque partie de la base (41) présente de préférence une tôle (42) pliée à vive arête qui présente deux côtés (43) formant des parois latérales (44) et une section intermédiaire (46) formant le plafond (47), les parois latérales (44) passant dans le plafond (47) par l'intermédiaire de bords (45) et l'étendue longitudinale des bords (45) étant transversale par rapport au sens de transport.

10. Dispositif de séchage selon l'une des revendications précédentes 3 à 9, **caractérisé en ce que** la disposition des ouvertures de dépression (25, 52) et/ou leur section et la partie sans trous de la bande transporteuse (5) sont coordonnées de telle manière qu'au moins une ouverture de dépression (25, 52) non recouverte ou une partie suffisamment grande de ces ouvertures de dépression (25, 52) est attribuée à une surface d'appui d'un objet pour la stabilité de maintien de la pièce.
